# EUROPÄISCHE PATENTANMELDUNG

(11) **EP 2 660 012 A2**
(43) Veröffentlichungstag der Anmeldung: **06.11.2013**
(21) Anmeldenummer: 13002363.3
(22) Anmeldetag: 03.05.2013
(51) Int. Cl.: B25J 9/06, B25J 13/08

(54) **Überwachungseinrichtung zur Überwachung von Positionen eines Roboters sowie Fertigungsanlage mit einer Überwachungseinrichtung**

(30) Priorität: 04.05.2012 CH 6232012
(71) Anmelder: Erowa AG, 5734 Reinach (CH)
(72) Erfinder: Hediger, Hans, CH-5734 Reinach (CH)
(74) Vertreter: Rottmann, Maximilian

(57) **Zusammenfassung**

Es wird eine Überwachungseinrichtung zum Überwachen und/oder Erfassen von vorgegebenen Positionen eines mindestens 2 Bewegungs-Achsen aufweisenden Roboters (5) vorgeschlagen. Die Überwachungseinrichtung weist zumindest zwei Sensoren (15, 16) auf, wobei der erste Sensor (15) zum Erfassen einer Horizontalposition und/oder Drehstellung eines Hauptträgers (9) des Roboters (5) ausgebildet ist und der zweite Sensor (16) eine definierte Horizontalstellung des Roboterarms (11) zu Erfassen bestimmt ist. Die Überwachungseinrichtung umfasst im weiteren selektiv angeordnete Sensor-Ansprechflächen (17a, 18a, 18b) für den ersten Sensor (15), welche im horizontalen Bewegungsbereich und/oder Schwenkbereich des Roboters (5) angeordnet sind.

## Beschreibung

### Technisches Gebiet

Die Erfindung betrifft eine Überwachungseinrichtung zum Überwachen und/oder Erfassen von vorgegebenen Positionen eines mindestens 2 Bewegungs-Achsen aufweisenden Roboters, welcher einen um eine vertikale Achse (Z-Achse) drehbaren Hauptträger und einen daran abgestützten Roboterarm aufweist. Ferner bezieht sich die Erfindung auf eine Fertigungsanlage mit einer solchen Überwachungseinrichtung.

### Stand der Technik

Um Roboter sicher betreiben zu können, beispielsweise in Fertigungsanlagen, müssen Vorkehrungen getroffen werden, damit Personen durch Bewegungen des Roboters nicht gefährdet werden. Die Vorkehrungen umfassen nebst aktiven Systemen wie beispielsweise Lichtschranken, Endschaltern und dergleichen zumeist auch noch zusätzlich eine Abschrankung in Form eines Schutzzauns. Sofern die Abschrankung innerhalb des Bewegungsbereichs des jeweiligen Roboters angeordnet wird, muss diese so stabil sein, dass der Roboter, namentlich der Roboterarm bzw. der Greifer oder das Werkstück diese nicht durchdringen kann. Dies ist notwendig, damit bei einer Fehlfunktion oder eines Programmier- oder Bedienfehlers der Roboterarm den jeweiligen Schutzzaun nicht durchbrechen kann. Es versteht sich, dass der Aufwand für eine solche Abschrankung bei hohen Transfergewichten enorm ist, zumal es durchaus üblich ist, mit gattungsgemässen Robotern Werkzeuge und insbesondere Werkstücke von bis zu 100 Kg und mehr zu transportieren. Natürlich könnte die Abschrankung auch ausserhalb des Bewegungsbereichs des Roboters angeordnet werden. Dies wird von Kunden jedoch insbesondere aus Gründen des Platzbedarfs und der Zugänglichkeit zu Maschinen, Magazinen und dergleichen kaum je akzeptiert.

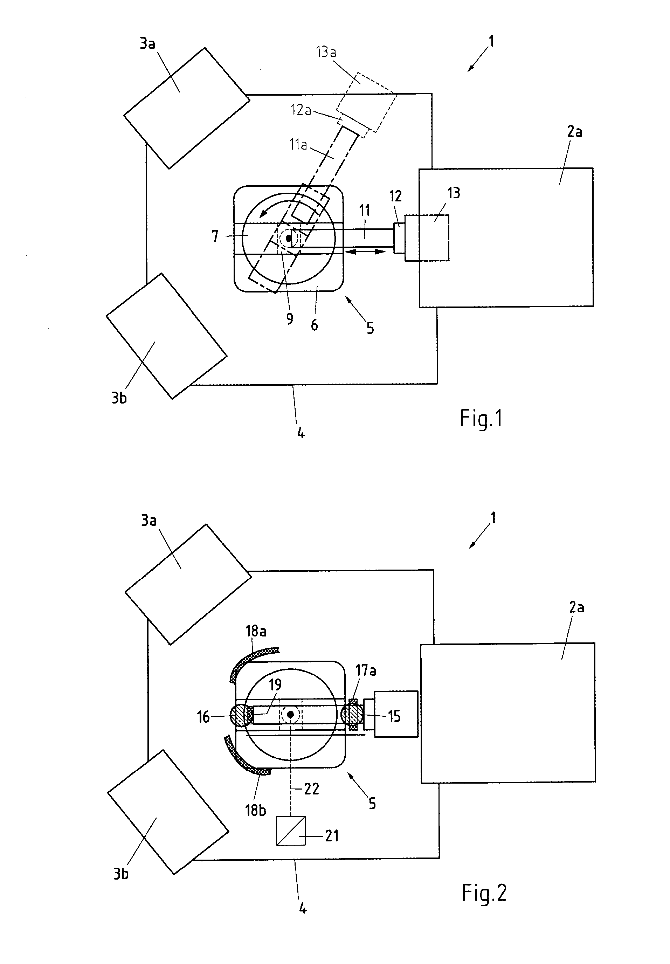

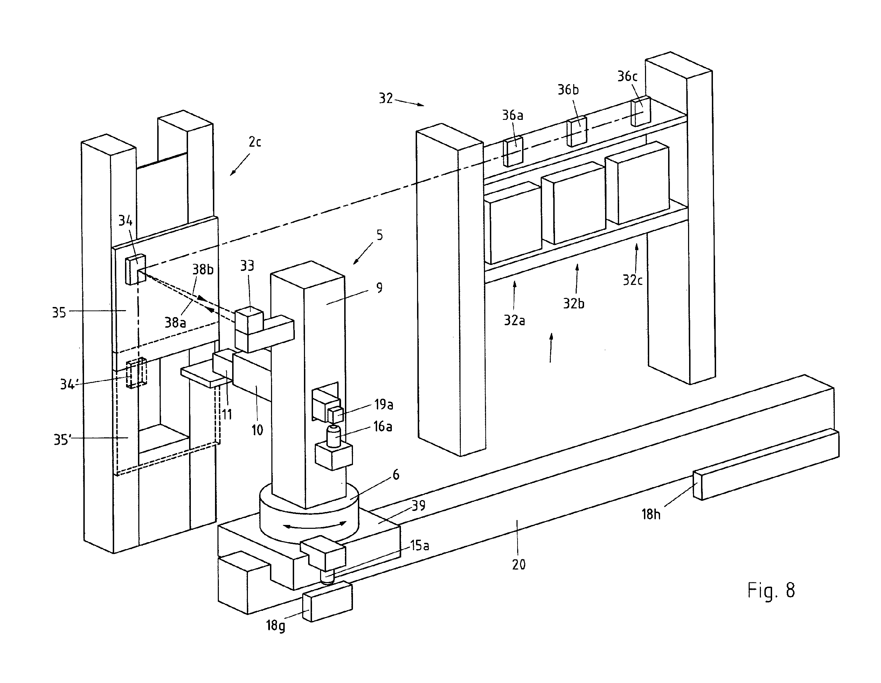

Aus der EP 0 122 147 A1 ist ein Industrieroboter bekannt, der über eine 320° Drehachse sowie eine Radialachse verfügt, so dass der Roboterarm drehbar und radial verschiebbar ist. Eine in den Fig. 1-5 dargestellte Radialachsen-Vorrichtung R umfasst einen Horizontalarm 20, der einen verschiebbaren Schlitten 22 trägt, ein doppeltes Führungsschienen-System mit zwei Schienen 62 und 64, eine Kugelumlaufspindel 30 und einen DC Antrieb 40 mit einem Antriebsmotor 42, einem Tachometer 44 und einem Drehgeber 46. Der Horizontalarm 20 ist endseitig mit einem Greifer G versehen. An einem verschiebbaren Träger 22 des Horizontalarms ist ein Näherungsschalter 24 angeordnet, der auf eine Sensor-Ansprechfläche 25 ausgerichtet ist. Die Enden 28, 29 der Sensor-Ansprechfläche 25 bilden gleichzeitig das Ende des Verschiebewegs des Schlittens 22. Wenn der Näherungsschalter 24 das eine Ende der Sensor-Ansprechfläche 25 passiert, wird ein vom Näherungsschalter 24 erzeugtes Signal an eine Kontroll-Konsole RC zurückgeschickt, wodurch die Kontroll-Konsole RC die Antriebsmotoren des Industrieroboters energiefrei schaltet. Diese Abstellfunktion tritt ebenfalls ein, wenn die Verkabelung des Näherungsschalters 24 unterbrochen oder beschädigt ist. An dem verschiebbaren Schlitten 22 ist ein weiterer Näherungsschalter 26 angebracht, der die Endstellung des Schlittens erkennt, wenn die Kontroll-Konsole RC einen Endstellungsbefehl erteilt. Die Radialachsen-Vorrichtung R reagiert auf den Endstellungsbefehl, indem sie den verschiebbaren Schlitten 22 soweit gegen die Drehachse T bewegt, bis der Näherungsschalter 26 die Endplatte 27 detektiert. Der Näherungsschalter 26 überträgt dann ein Signal an die Kontroll-Konsole RC und diese sucht dann die Null Position des Drehgebers 45. Dadurch wird der verschiebbare Schlitten 22 in der Endstellung positioniert. Die Endstellung dient als Referenz für die Startposition aller Programminformationen die in dem Speicher der Kontroll-Konsole RC abgelegt sind. An der Radialachsen-Vorrichtung R ist ein weiterer, als Endschalter dienender Näherungsschalter 110 angeordnet, welcher mit einer an dem Gehäuse 82 der Drehachse T angeordneten Zielplatte 112 zusammenarbeitet. Wie aus der Fig. 8 ersichtlich ist, erstreckt sich die Zielplatte 112 über einen Winkel von ca. 320°. Der weitere Näherungsschalter 110 erkennt die Enden 113 und 115 des Bewegungsbereichs (Drehbewegung), indem er der Kontroll-Konsole RC signalisiert, den Antriebsmotor stromfrei zu schalten. Somit werden bei diesem Roboter eine Radialachse, eine Drehachse sowie eine Endstellung des Trägers erfasst.

In der US 4,795,957 A ist ein herkömmlicher Roboter 10 offenbart, dem ein Tisch 14 zugeordnet ist, welcher in X- und Y-Richtung verschiebbar sowie drehbar ist. Wie anhand der Fig. 1 und 2 erkennbar ist, ist der Roboterarm 20 über zwei Leitungen 56 elektrisch mit einer Stromquelle 52 verbunden, wobei die eine Leitung mit drei seriell angeordneten Schaltern S1, S2, S3 versehen ist. Die genannten drei Schalter S1, S2, S3 werden mechanisch individuell betätigt, d.h. von der geschlossenen in die offene Position gebracht, wenn der Roboterarm eine vorgegebene Position überschreitet, was zu einem Stromunterbruch führt.

Aufgabe der Erfindung ist es, eine dem eingangs genannten technischen Gebiet zugehörende Überwachungseinrichtung zu schaffen, mit welcher bestimmte Positionen des Roboters wie auch des Roboterarms aktiv erfasst und/oder überwacht werden können, so dass insbesondere eine Vereinfachung einer allfälligen Sicherheitsabschrankung ermöglicht wird, indem diese nur noch als Zutritts- und Zugriffsschutz ausgebildet sein muss.

Die Lösung der Aufgabe ist durch die Merkmale des Anspruchs 1 definiert. Gemäss der Erfindung weist die Überwachungseinrichtung zumindest zwei Sensoren und den Sensoren zugeordnete Sensor-Ansprechflächen auf, wobei die Überwachungseinrichtung dem Roboter in Abhängigkeit des an dem einen und/oder anderen Sensor anstehenden Signals ein Freigabesignal zum Ausführen vorbestimmter Bewegungen erteilt, und wobei der erste Sensor eine Horizontalposition und/oder Drehstellung des Hauptträgers zu Erfassen bestimmt ist und der zweite Sensor eine definierte Horizontalstellung des Roboterarms, insbesondere dessen zurückgezogene Position, zu Erfassen bestimmt ist, und wobei im horizontalen Bewegungsbereich und/oder Schwenkbereich des Roboters unabhängig von dem Roboter selektiv Sensor-Ansprechflächen für den ersten Sensor angeordnet sind.

Durch diese Ausbildung wird die grundsätzliche Voraussetzung geschaffen, damit vorgegebene Positionen eines mindestens 2 Bewegungs-Achsen aufweisenden Roboters einerseits aktiv überwacht und/oder erfasst werden können und andererseits der Roboter derart angesteuert wird, dass er nur in vorbestimmbaren Bereichen definierte Bewegungen ausführen kann.

Die Grundidee der Erfindung besteht somit darin, einerseits im Bereich von erlaubten Roboterbewegungen selektiv und unabhängig vom Roboter angeordnete Sensor-Ansprechflächen für den ersten Sensor vorzusehen, so dass bei angesprochenem ersten Sensor einerseits der Roboter selber und andererseits auch der Roboterarm bewegt werden darf, insbesondere ausgefahren werden kann. Zudem kann mittels des zweiten Sensors eine definierte Horizontalstellung des Roboterarms, insbesondere dessen zurückgezogene Ruhestellung, erfasst werden. Durch Auswerten der beiden Sensorsignale kann unterschieden werden, ob der Roboter selber und/oder der Roboterarm bewegt werden darf/dürfen oder ob der Roboter grundsätzlich keine Bewegungen durchführen darf, so dass letztlich Personen nicht gefährdet werden.

Im Gegensatz zu herkömmlichen Systemen, bei den beispielsweise mittels Lichtschranken sichergestellt werden soll, dass der Roboterarm durch eine Horizontalbewegung nicht in bestimmte Bereiche eindringen oder vordringen kann, indem beim Unterbrechen des Lichtstrahls die Bewegung des Roboters bzw. Roboterarms gestoppt wird, kann mit der erfindungsgemässen Lösung sichergestellt werden, dass der Roboter bzw. Roboterarm überhaupt nur innerhalb bestimmter, d.h. erlaubter Bereiche eine Horizontalbewegungen ausführen bzw. den Roboterarm ausfahren kann, wodurch eine funktionale, namentlich eine positive Sicherheit gegeben ist, indem beispielsweise auch ein Fehler eines Elements oder Bestandteils der Überwachungseinrichtung keine gefährliche Situation für Personen bzw. einen allfälligen Bediener herbeiführen kann, da der Roboterarm nicht in die Abschrankung eindringen oder diese gar durchdringen kann.

Es versteht sich, dass die Horizontalposition des Roboters bzw. des Hauptträgers nicht direkt überwacht werden muss, sondern dass dies auch indirekt über zumindest ein Element erfolgen kann, welches einen Rückschluss auf die Position des Horizontalposition des Hauptträgers zulässt. Diesbezüglich sei beispielsweise eine Grundplatte oder ein Fussteil des Roboters erwähnt.

Bei einer besonders bevorzugten Weiterbildung sind die jeweiligen, dem ersten Sensor zugeordneten Sensor-Ansprechflächen ortsfest angeordnet. Auf diese Weise wird der Bereich definiert, innerhalb dessen der Roboter bestimmte Bewegungen ausführen darf.

Eine alternatives Ausführungsbeispiel sieht vor, die jeweilige, dem ersten Sensor zugeordnete Sensor-Ansprechfläche in einer Achse beweglich anzuordnen. Dadurch sind Positionen von bestimmten Elementen, beispielsweise einer Tür, erkennbar.

Bei einer bevorzugten Weiterbildung der Überwachungseinrichtung wird vorgeschlagen, zumindest einzelne Sensoren als digitale Näherungsschalter auszubilden, an denen im angesprochenen Zustand ein Ausgangssignal von 1 ansteht. Dies stellt eine besonders einfache und kostengünstige Lösung dar.

Bei einer weiteren Weiterbildung der Überwachungseinrichtung ist vorgesehene, dass zumindest ein Sensor ein optischer Sensor ist, mittels welchem eine vorbestimmte Position des Roboters erkennbar ist. Ein optischer Sensor hat den Vorteil, dass zwischen dem Sensor und der zugeordneten Sensor, Ansprechfläche ein grosser Abstand bestehen kann.

Bei einer weiteren, besonders bevorzugten Weiterbildung umfasst die Überwachungseinrichtung eine mit den Sensoren verbundene Erfassungs- und Steuereinheit, welch letztere den Roboter derart zu steuern bestimmt ist, dass eine Bewegungsfreigabe nur dann erteilt wird, wenn sich der erste und/oder zweite Sensor im angesprochenen Zustand befindet. Mit einer solchen Erfassungs- und Steuereinheit können die Sensorsignale ausgewertet und direkt Einfluss auf die Bewegung des Roboters genommen werden.

Vorzugsweise steuert die Erfassungs- und Steuereinheit den Roboter derart, dass eine Bewegungsfreigabe an den Roboterarm nur dann erteilt wird, wenn sich der erste Sensor im angesprochenen Zustand befindet. Dadurch können die Bereiche bestimmt werden, innerhalb welchen der Roboterarm grundsätzlich ausgefahren werden darf.

Weiters bevorzugt steuert die Erfassungs- und Steuereinheit den Roboter derart, dass eine Bewegungsfreigabe zur horizontalen Bewegung des gesamten Roboters nur dann erteilt wird, wenn sich der zweite Sensor im angesprochenen Zustand befindet. Dadurch wird sichergestellt, dass der Roboter nur mit zurückgezogenem Roboterarm horizontal bewegt wird.

Vorzugsweise sind die dem ersten Sensor zugeordneten Sensor-Ansprechflächen nur im Bereich von erlaubten Bewegungen des Roboterarms angeordnet, insbesondere im Bodenbereich und insbesondere von Bearbeitungsmaschinen und/oder Magazinen. Dadurch kann sichergestellt werden, dass beispielsweise Bearbeitungsmaschinen und/oder Magazine mittels des Roboters bestückt werden können.

Bevorzugt umfasst die Überwachungseinrichtung bei einem ortsfest angeordneten, jedoch schwenkbaren Roboter gekrümmte oder gebogene, im Schwenkbereich des Roboters angeordnete und dem ersten Sensor zugeordnete Sensor-Ansprechflächen. Dies erlaubt innerhalb des Schwenkbereichs des Roboters bestimmte Abschnitte auszuwählen, innerhalb denen der Roboterarm grundsätzlich ausgefahren werden darf.

Vorzugsweise ist der zweite Sensor an einem den Roboterarm tragenden Vertikalschlitten angeordnet ist, während an dem Roboterarm eine dem zweiten Sensor zugeordnete Sensor-Ansprechfläche derart angeordnet ist, dass an dem zweiten Sensor ein Ausgangssignal von 1 ansteht, sobald sich der Roboterarm in der zurückgezogenen Ruheposition befindet. Dies stellt eine besonders einfache Lösung zur Überwachung der zurückgezogenen Ruhestellung des Roboterarms dar.

Zur Überwachung von Horizontalpositionen eines in einer Richtung (Y-Richtung) verfahrbar angeordneten Roboters weist die Überwachungseinrichtung bei einer weiteren bevorzugten Ausführungsform parallel und/oder quer zur Y-Richtung verlaufende, dem ersten Sensor zugeordneten Sensor-Ansprechflächen auf. Auf diese Weise können die Sensor-Ansprechflächen einfach und kostengünstig gestaltet und schnell und einfach angebracht werden.

Eine weitere, bevorzugte Weiterbildung der Überwachungseinrichtung dient dem Überwachen und/oder Erfassen von vorgegebenen Positionen eines Roboters, dessen Hauptträger mittels eines drehbaren Fussteils auf einer Grundplatte abgestützt ist, wobei auf der Grundplatte des Roboters zumindest zwei unter einem Winkel zueinander angeordnete Sensoren angebracht sind, und am drehbaren Fussteil eine mit den genannten Sensoren zusammenwirkende Sensor-Ansprechfläche derart angeordnet ist, dass bei vorbestimmten Drehpositionen des Hauptträgers einer der Sensoren angesprochen ist. Diese Variante eignet sich insbesondere für den Fall, dass der Roboter nur sehr wenige Positionen anfahren muss.

Sofern ein in Y-Richtung verfahrbarer Roboter überwacht werden soll, dessen Hauptträger mittels eines drehbaren Fussteils auf einer Grundplatte abgestützt ist, weist die Überwachungseinrichtung bevorzugt zumindest zwei unter einem Winkel zueinander auf der Grundplatte des Roboters angeordnete Sensoren auf, welche derart mit im Bereich des Bodens anzubringenden Sensor-Ansprechflächen zusammenwirken, dass bei vorbestimmten Verschiebepositionen des Roboters in Y-Richtung einer der Sensoren angesprochen ist. Dies stellt eine weitere einfache Variante dar, wenn der Roboter nur sehr wenige Positionen anfahren muss.

Besonders bevorzugt dient die Überwachungseinrichtung zur Überwachung eines Roboters, dessen Roboterarm in horizontaler Richtung und in Relation zum Hauptträger nur entlang einer Achse verschiebbar ist. Bei einem solchen Roboter ist es besonders einfach, die zurückgezogene Horizontalstellung des Roboterarms mittels des zweiten Sensors zu Überwachen. Eine Horizontalbewegung des Roboterarms in Relation zum Hauptträger ist zudem diejenige Bewegeung, welche in Richtung der Abschrankung gehen kann und daher Personen und Bediener gefährden kann.

Eine weitere Aufgabe der Erfindung besteht darin, eine Überwachungseinrichtung zü schaffen, mittels welcher sich ein Roboter einer Fertigungsanlage sicher betreiben lässt, indem zuverlässig verhindert wird, dass der Roboter und insbesondere der Roboterarm abseits von Magazinen und Maschinen keine unerlaubten Horizontalbewegungen ausführt.

Diese Aufgabe wird gelöst, indem die Fertigungsanlage mit einer Überwachungseinrichtung versehen ist, welche zumindest zwei Sensoren aufweist, wobei im Bereich des/der mittels des Roboters jeweils zu bestückenden Magazins bzw. der zu bestückenden Bearbeitungsmaschine jeweils eine Sensor-Ansprechfläche derart angeordnet ist, dass der erste Sensor durch die jeweilige Sensor-Ansprechfläche angesprochen ist, wenn sich der Roboter im Beladebereich bzw. Entladebereich des jeweiligen Magazins bzw. der jeweiligen Bearbeitungsmaschine befindet und wobei der zweite Sensor derart am Roboter angeordnet ist, dass damit eine definierte Horizontalstellung des Roboterarms, insbesondere dessen zurückgezogene Ruhestellung, erfasst werden kann. Dadurch kann vorgegeben werden, dass der Roboter nur im Bereich einer Bearbeitungsmaschine bzw. eines Magazins bestimmte Bewegungen ausführen darf.

Bei einer bevorzugten Weiterbildung der Fertigungsanlage ist die horizontale Ausdehnung der jeweiligen Sensor-Ansprechfläche so gewählt, dass der Roboter bei angesprochenem Sensor um einen vorbestimmten Weg verschoben und/oder um einen vorbestimmten Winkel gedreht werden kann. Dadurch kann grundsätzlich sichergestellt werden, dass der Roboter so weit bewegt werden kann, dass sämtliche Bereiche des zu bestückenden Magazins bzw. der zu bestückenden Bearbeitungsmaschine für den Roboter zugänglich werden.

Bei einer weiteren bevorzugten Weiterbildung der Fertigungsanlage ist der zweite Sensor angesprochen, wenn sich der Roboterarm in einer zurückgezogenen Ruhestellung befindet. Dies trägt zu einer positiven Sicherheit der Anlage bei.

Vorzugsweise erteilt die Erfassungs- und Steuereinheit bei einer weiteren, vorteilhaften Weiterbildung der Fertigungsanlage nur dann eine Bewegungsfreigabe an den Roboter, wenn sich zumindest einer der beiden Sensoren im angesprochenen Zustand befindet. Auch dies trägt zu einer positiven Sicherheit der Anlage bei.

Schliesslich ist bei einer weiteren, bevorzugten Weiterbildung der Fertigungsanlage vorgesehen, dass die Bewegungsfreigabe an den Roboter mittels der Erfassungs- und Steuereinheit sofort unterbunden wird, wenn sich keiner der beiden Sensoren im angesprochenen Zustand befindet. Dadurch soll sichergestellt werden, dass der Roboter sofort gestoppt wird, auch wenn er sich in Bewegung befinden sollte, damit eine Gefährdung von Personen vermieden werden kann. Durch diese Massnahme wird auch im Falle eines Defekts von Elementen der Überwachungseinrichtung die Bewegung des Roboters unterbunden, was letztlich auch zu einer positiven Sicherheit der Anlage beiträgt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Nachfolgend wird die Erfindung anhand von Zeichnungen näher erläutert. Dabei zeigt:
- Fig. 1: eine Draufsicht auf eine nach dem Stand der Technik ausgebildete Fertigungsanlage;
- Fig. 2: eine Draufsicht auf die Fertigungsanlage gemäss Fig. 1 zusammen mit einer ersten Ausführungsform einer erfindungsgemässen Überwachungseinrichtung;
- Fig. 3: die Fertigungsanlage gemäss Fig. 2 in einer weiteren Draufsicht;
- Fig. 4: die Fertigungsanlage gemäss Fig. 2 in einer ersten Seitenansicht;
- Fig. 5: die Fertigungsanlage gemäss Fig. 2 in einer weiteren Seitenansicht;
- Fig. 6: eine Draufsicht auf eine weitere Fertigungsanlage zusammen mit einer weiteren Ausführungsform der erfindungsgemässen Überwachungseinrichtung;
- Fig. 7: einen Roboter zusammen mit einem alternativen Ausführungsbeispiel einer erfindungsgemässen Überwachungseinrichtung,
- Fig. 7a: einen vergrösserten Ausschnitt aus der Fig. 7,
- Fig. 7b: einen weiteren vergrösserten Ausschnitt aus der Fig. 7, und
- Fig. 8: ein alternatives Ausführungsbeispiel der Erfindung.

Grundsätzlich sind in den Figuren gleiche Teile mit gleichen Bezugszeichen versehen.

### Wege zur Ausführung der Erfindung

Die Figur 1 zeigt schematisch eine Draufsicht auf eine nach dem Stand der Technik ausgebildete Fertigungsanlage 1. Die Fertigungsanlage 1 weist beispielhaft eine Bearbeitungsmaschine 2a, zwei Magazine 3a, 3b, eine umlaufende Abschrankung 4 sowie einen Roboter 5 auf. Der Ausdruck Roboter wird jeweils stellvertretend für sämtliche Ausführungsformen von Handhabungsgeräten verwendet.

Die Magazine 3a, 3b dienen der Aufnahme von Werkzeugen und/oder Werkstücken. Als Maschinen seien beispielhaft und nicht abschliessend Erodiermaschinen, Fräsmaschinen, Schleifmaschinen, Messmaschinen oder Drehbänke erwähnt. Als Roboter kommt beispielhaft ein vier-Achsen Roboter zum Einsatz, dessen Kupplungselement -Greifer- in drei Translationsachsen X- und Y- und Z sowie einer Drehachse C bewegbar ist. Der Roboter 5 umfasst eine Grundplatte 6, auf der ein sich in vertikaler Richtung erstreckenden Hauptträger 9 mittels eines runden Fussteils 7 angeordnet ist. An dem um eine vertikale Achse drehbaren Hauptträger 9 ist ein vertikal verfahrbarer Vertikalschlitten (nicht dargestellt) gelagert. An dem Vertikalschlitten ist ein horizontal verfahrbarer Roboterarm 11 in der Form eines Horizontalauslegers abgestützt. Schliesslich ist an dem Roboterarm 11 endseitig ein Greifer 12 angeordnet, der dem Ergreifen und Halten eines schematisch angedeuteten Werkzeugs und/oder Werkstücks 13 dient, wobei nachfolgend der Einfachheit halber meist nur noch von Werkstück gesprochen wird. Durch gestrichelte Linien ist zudem eine gedrehte Position des Hauptträgers 9 zusammen mit dem Roboterarm 11a, dem Greifer 12a und einem Werkstück 13a dargestellt. Eine horizontale Relativbewegung des Roboterarms 11a gegenüber dem Hauptträger 9, insbesondere auch in Richtung der Abschrankung 4, kann nur in einer Achse, namentlich entlang einer linearen Horizontalachse, erfolgen. Da der grundsätzliche Aufbau eines derartigen Roboters bekannt ist, wird nicht näher darauf eingegangen.

Der innerhalb der Abschrankung 4 angeordnete Roboter 5 dient insbesondere dem Zu- und Wegführen von Werkstücken 13 zu der Bearbeitungsmaschine 2a. Die Werkstücke werden dabei den Magazinen 3a, 3b entnommen bzw. zugeführt.

Die Abschrankung 4 ist aus Gründen des Platzbedarfs normalerweise möglichst weit innen, d.h. innerhalb der Roboterreichweite angeordnet. Eine solche Abschrankung 4 muss daher als Sicherheitsumzäunung ausgebildet sein, indem sie als Zutritts- wie auch als Zugriffsschutz für Personen dient. Gleichzeitig muss die Abschrankung 4 aber auch sicherstellen, dass der Roboterarm 11 bzw. dessen Greifer 12 zusammen mit einem allfälligen Werkzeug oder Werkstück 13 diese nicht durchdringen kann. Dies ist deshalb notwendig, da bei einem Verdrehen des Roboters 5 mit ausgefahrenem Roboterarm 11 a der Greifer 12a bzw. ein allfälliges Werkstück 13a die Abschrankung 4 durchbrechen könnte, was eine potentielle Gefahr für Personen darstellen würde, sofern die Abschrankung 4 nicht entsprechend stabil aufgebaut ist. Es versteht sich, dass der Aufwand für eine solche Abschrankung 4 bei hohen Transfergewichten enorm ist, zumal es durchaus üblich ist, mit gattungsgemässen Robotern Werkzeuge und insbesondere Werkstücke von bis zu 100 Kg und mehr zu transportieren.

Fig. 2 zeigt schematisch eine Draufsicht auf die Fertigungsanlage gemäss Fig. 1, zusammen mit einer ersten Ausführungsform einer erfindungsgemässen Überwachungseinrichtung. Die Überwachungseinrichtung umfasst einen ersten Sensor 15, einen zweiten Sensor 16, drei horizontal verlaufende Sensor-Ansprechflächen 17a, 18a, 18b eine vertikal verlaufende Sensor-Ansprechfläche 19 sowie eine Erfassungs- und Steuereinheit 21, welch letztere sowohl mit den Sensoren 15, 16 wie auch mit dem Roboter 5 verbunden ist, was durch eine Verbindungslinie 22 angedeutet ist. Der erste Sensor 15 ist an der Grundplatte 6 des Roboters 5 angeordnet, während der zweite Sensor 16 an dem Vertikalschlitten (nicht dargestellt) fixiert ist.

Die drei horizontal verlaufenden Sensor-Ansprechflächen 17a, 18a, 18b sind unabhängig von dem Roboter ortsfest im Bereich des Bodens derart angeordnet, dass der erste Sensor 15 beim Verdrehen des Roboters 5 im wesentlichen entlang, d.h. oberhalb der jeweiligen Sensor-Ansprechfläche 17a, 18a, 18b verfahren wird, so dass der Sensor 15 mit der jeweiligen Sensor-Ansprechfläche 17a, 18a, 18b zusammenwirken kann. Unabhängig von dem Roboter heisst, dass die Sensor-Ansprechflächen 17a, 18a, 18b nicht an dem Roboter selber angeordnet sind und somit auch Roboterbewegungen nicht mitmachen.

Die beiden Sensoren 15, 16 sind als digitale Näherungsschalter ausgebildet, indem an deren Ausgang das Signal U_{A} 0 ansteht, sofern sie nicht in der Nähe einer Sensor-Ansprechfläche sind. Sobald ein bestimmter Mindestabstand zwischen dem ersten Sensor 15 und einer zugehörigen Sensor-Ansprechfläche 17a, 18a, 18b unterschritten wird, steht am Ausgang des ersten Sensors 15 ein Signal U_{A} 1 an. Ähnlich verhält es sich zwischen dem zweiten Sensor 16 und der am Ende des Roboterarms angeordneten vertikal verlaufenden Sensor-Ansprechfläche 19. Sobald sich der Roboterarm 11 in der hinteren Ruhestellung, d.h. in der nach hinten zurückgezogenen Position befindet, so steht am Ausgang des zweiten Sensors 16 ein Signal 1 an. Allerdings kann hier nur die genannte eine Sensor-Ansprechfläche 19 mit dem zweiten Sensor 16 zusammenwirken. Die erste Sensor-Ansprechfläche 17a ist derart gestaltet und vor der Bearbeitungsmaschine 2a angeordnet, dass der Sensor 15 angesprochen wird, wenn der Roboter 5 mit seiner Vorderseite der Bearbeitungsmaschine 2a zugewandt ist. Sobald der Sensor 15 anspricht, erhält der Roboter 5 von der Erfassungs- und Steuereinheit 21 ein Freigabe, damit der Roboterarm 11 zwecks Beladung bzw. Entladung der Bearbeitungsmaschine 2a insbesondere horizontal bewegt werden kann. In der zurückgezogenen Position des Roboterarms 11, namentlich wenn der zweite Sensor 16 durch die zugeordnete Sensor-Ansprechfläche 19 angesprochen ist, kann der gesamte Roboter 5 in einer Richtung (Y-Richtung) horizontal verfahren und um die vertikale Achse (Z-Achse) gedreht werden.

Die erste Sensor-Ansprechfläche 17a besitzt eine derartige Länge, dass der Roboter, bei angesprochenem Sensor 15, um einen vorbestimmten Winkel vor der Bearbeitungsmaschine 2a verschwenkt werden kann. Auf diese Weise wird eine sichere Zugänglichkeit zu allen Bereichen der Bearbeitungsmaschine 2a sichergestellt. Gleiches trifft auf die beiden vor den Magazinen 3a, 3b angeordneten Sensor-Ansprechflächen 18a, 18b zu, welche allerdings gebogen/gekrümmt sind und ein Verdrehen/Verschwenken des Roboters 5 um einen vorgegebenen Winkel erlauben.

Die Sensoren funktionieren vorzugsweise auf induktiver Basis, indem sie ein elektromagnetisches Feld erzeugen, welches durch die Sensor-Ansprechfläche, namentlich ein Dämpfungsmaterial in Form eines elektrisch leitfähigen Metalls, beeinflusst werden kann. Sobald ein definierter Mindestabstand zwischen Sensor und der genannten Sensor-Ansprechfläche -Metall- unterschritten wird, ändert sich das Ausgangssignal U_{A} des jeweiligen Sensors 15, 16 von 0 auf 1. Da es unterschiedlichste Ausführungsformen von derartigen, als Näherungsschalter wirkenden Sensoren gibt, und auch unterschiedlichste Formen und Materialien zur Beeinflussung des vom Sensor emittierten Felds gibt, wird im vorliegenden Zusammenhang nur von Sensor und Sensor-Ansprechfläche gesprochen, wobei damit sämtlich Ausführungsformen von Näherungsschaltern oder dergleichen umfasst werden sollen.

Vorzugsweise bestehen die Sensor-Ansprechflächen aus einem Metallblech oder einer Metallschicht, welche(s) an einer entsprechenden Stelle angebracht oder aufgebracht wird. Jedenfalls sind die Sensor-Ansprechflächen vorzugsweise passiv ausgebildet.

In der in Fig. 2 dargestellten Position, bei welcher sowohl der erste Sensor 15 wie auch der zweite Sensor 16 im Ansprechbereich einer Sensor-Ansprechfläche 17a, 19 sind, steht somit am Ausgang beider Sensoren ein Signal U_{A} von 1 an. Um zu entscheiden, ob der Roboter 5 gedreht und/oder der Roboterarm 11 horizontal ausgefahren werden darf, wird mittels der Erfassungs- und Steuereinheit 21 jeweils überprüft, ob zumindest an einem der beiden Sensoren ein Ausgangssignal U_{A} von 1 ansteht. Sofern dies der Fall ist (U_{A} erster Sensor + U_{A} zweiter Sensor ≥ 1) kann der Roboter 5 bewegt werden. Jedenfalls wird eine Bewegungsfreigabe nur dann erteilt, wenn sich der erste und/oder zweite Sensor im angesprochenen Zustand befindet. Allerdings ist dies ein Zustand, der im Betrieb nicht auftreten dürfte.

Auch wenn im Zusammenhang mit dem zweiten Sensor 16 jeweils von Sensor-Ansprechfläche gesprochen wird, so ist darunter nicht zwingend ein Fläche zu verstehen, sondern je nach Sensor kann es genügen, ein Objekt, einen Körper, einen Punkt usw. vorzusehen, auf den der Sensor 16 bei Annäherung anspricht. Im Zusammenhang mit dem ersten Sensor 15 ist jedoch eine Sensor-Ansprechfläche vorzusehen, die eine bestimmte Oberfläche und damit eine bestimmte Ausdehnung hat. Natürlich kann eine solche Fläche auch durch eine Vielzahl von kleinen Flächen oder Punkten erzeugt werden. Neben induktiv arbeitenden Sensoren können beispielsweise auch kapazitive, magnetische, optische oder ultraschallbasierte Sensoren zum Einsatz kommen.

Es versteht sich, dass die Erfassungs- und Steuereinheit 21 nicht als separate Einheit ausgebildet sein muss, sondern dass sie Bestandteil der Maschinensteuerung sein kann.

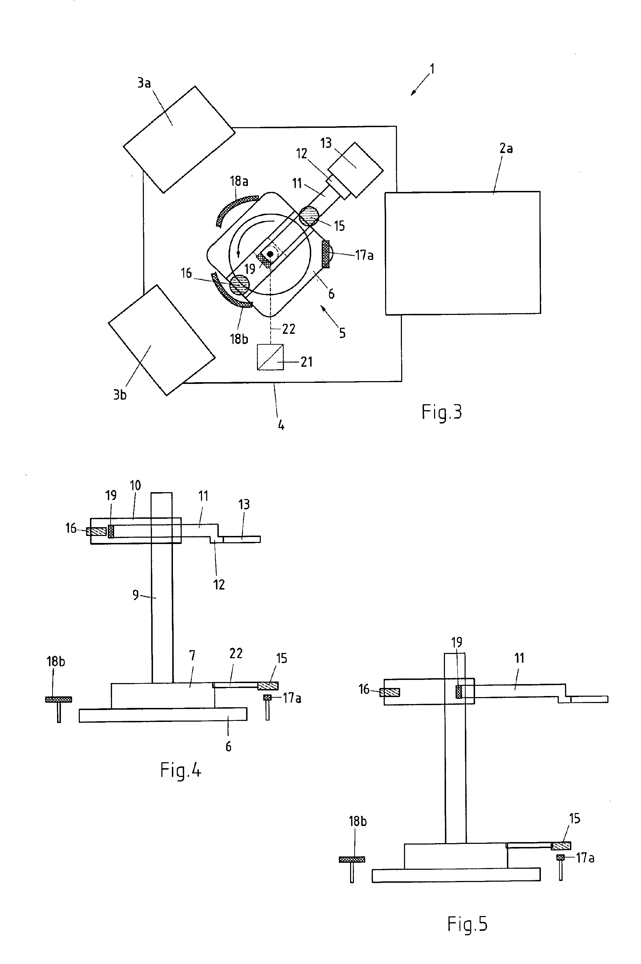

Die Fig. 3 zeigt die Fertigungsanlage gemäss Fig. 2 zusammen mit der Überwachungseinrichtung, wobei der Roboter 5 in gedrehter Stellung mit teilweise ausgefahrenem Roboterarm 11 dargestellt ist. Da sich der erste Sensor 15 nicht im Ansprechbereich einer Sensor-Ansprechfläche 17a, 18a, 18b befindet, darf der Roboter 5 nur verschwenkt werden, allerdings auch nur dann, wenn sich der Roboterarm 11 im zurückgezogenen Zustand befindet, so dass der zweite Sensor 16 durch die Sensor-Ansprechfläche 19 angesprochen ist. In der Darstellung gemäss Fig. 3 ist der Roboterarm 11 jedoch teilweise ausgefahren, wodurch der zweite Sensor 16 nicht mehr im Ansprechbereich der Sensor-Ansprechfläche 19 ist. Sofern der Roboterarm 11 weiter ausgefahren würde, bestünde die Gefahr, dass er in die Abschrankung 4 eindringt, was unbedingt verhindert werden muss. Daher wird der Roboter in dem in Fig. 3 gezeigten Zustand sofort energiefrei geschaltet, da die Addition der beiden Sensorausgangssignale 0 ergibt (U_{A} erster Sensor + U_{A} zweiter Sensor = 0) und somit die Bedingung (U_{A} erster Sensor + U_{A} zweiter Sensor ≥ 1) nicht mehr erfüllt ist. Sofern die Addition der beiden Sensorausgangssignale 0 ergibt, führt dies zu einem sofortigen Stopp des Roboters und einer entsprechenden Fehlermeldung.

Die Überwachungseinrichtung weist grundsätzlich eine positive Sicherheit auf, da zumindest einer der Sensoren 15, 16 ein Ausgangssignal U_{A} von 1 haben muss, damit eine Roboterbewegung überhaupt möglich ist. Dadurch kann sichergestellt werden, dass auch bei einem Ausfall eines Sensors, einem Unterbruch einer Anschlussleitung, einer Softwarestörung oder dergleichen der Roboter grundsätzlich nicht in einen unerlaubten Betriebszustand bzw. in eine Personen gefährdende Position überführt werden kann.

Durch Auswerten der Sensorsignale können vorgegebene Positionen des Roboters erfasst werden.

Neben den dargestellten Magazinen und der Bearbeitungsmaschine eignen sich gattungsgemässe Roboter beispielsweise auch zum Beladen und/oder Entladen von Rüststationen, Beladestationen sowie Ein- und Ausschleusplätzen, wobei auch diese Aufzählung nicht abschliessend ist.

Die Fig. 4 zeigt den Roboter zusammen mit wesentlichen Elementen der Überwachungseinrichtung in einer Seitenansicht. Aus dieser Darstellung ist neben dem Hauptträger 9 und dem Vertikalschlitten 10 des Roboters 5 insbesondere die Anordnung der Sensoren 15, 16 sowie die Zuordnung der Sensor-Ansprechflächen 17a, 18b zu den Sensoren 15, 16 ersichtlich. Der erste Sensor 15 ist mittels eines Halters 22 an dem Fussteil 7 des Roboters 5 befestigt. Beim Verschwenken des Roboters 5 dreht sich der erste Sensor 15 mit dem Fussteil 7 mit. Die Sensor-Ansprechflächen 17a, 18b verlaufen im wesentlichen horizontal, d.h. parallel zum Boden und sind mittels Trägern am Boden befestigt, wobei in vertikaler Richtung ein bestimmter Abstand zwischen den Sensor-Ansprechflächen 17a, 18b und dem ersten Sensor 15 besteht. Der zweite Sensor 16 ist an der Rückseite des Roboterarms 11 befestigt und verläuft im wesentlichen in vertikaler Richtung. Die dem zweiten Sensor 16 zugeordnete Sensor-Ansprechfläche 19 ist fest mit dem Vertikalschlitten 10 verbunden. Im vorliegenden Beispiel ist der erste Sensor 15 durch die Sensor-Ansprechfläche 17a angesprochen, während der zweite Sensor 16 durch die Sensor-Ansprechfläche 19 angesprochen ist. Daher liegt am Ausgang beider Sensoren 15, 16 ein Signal U_{A} von 1 an.

Die Fig. 5 zeigt die Fertigungsanlage gemäss Fig. 4, wobei der Roboterarm 11 in einem nach vorne verfahrenen Zustand dargestellt ist. In dargestellten Zustand spricht der erste Sensor 15 durch die Sensor-Ansprechfläche 17a an, während der zweite Sensor 16 nicht angesprochen ist, da die zugeörige Sensor-Ansprechfläche 19 zu weit entfernt ist. Somit liegt am Ausgang des ersten Sensors 15 ein Signal U_{A} von 1 an, während am Ausgang des zweiten Sensors 16 ein Signal U_{A} von 0 anliegt.

Grundsätzlich können die Sensoren und insbesondere auch der erste Sensor seitlich an dem Roboter angeordnet werden, wobei die Sensor-Ansprechflächen ggf. auch vertikal oder schräg verlaufen können.

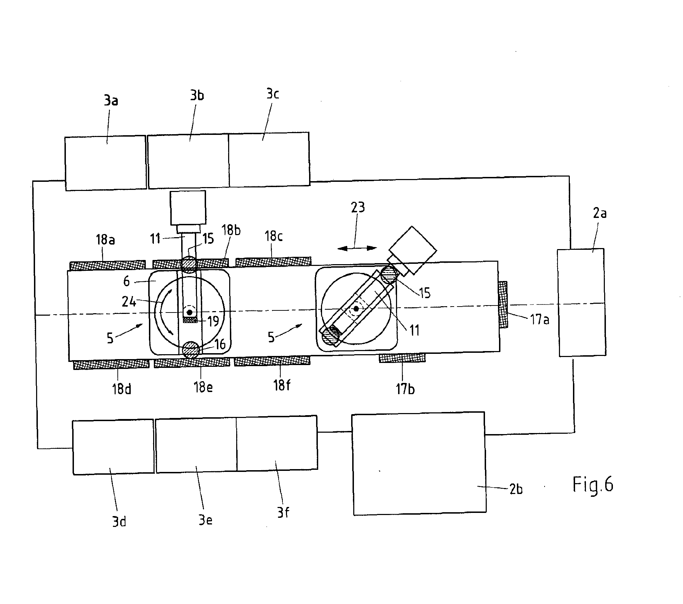

Die Fig. 6 zeigt ein alternatives Ausführungsbeispiel der Erfindung zusammen einer Fertigungsanlage. Die Fertigungsanlage umfasst in diesem Beispiel einen Roboter 5, sechs Magazine 3a-3f, zwei Bearbeitungsmaschinen 2a, 2b sowie eine Abschrankung 4. Der Roboter 5 ist mittels seiner Grundplatte 6 auf einem in Y-Richtung horizontal verfahrbaren Hauptschlitten (nicht dargestellt) angeordnet, wobei der Hauptträger 9 drehbar auf der Grundplatte 6 abgestützt ist. Die Y-Richtung ist mittels eines Doppelpfeils 23 angedeutet, während die Drehrichtung um die Z-Achse mittels eines weiteren Doppelpfeils 24 angedeutet ist. Die Überwachungseinrichtung umfasst neben der am rückwärtigen Ende des Roboterarms 11 angeordneten, vertikal verlaufenden Sensor-Ansprechfläche 19 insgesamt acht weitere Sensor-Ansprechflächen 17a, 17b, 18a,-18f, welche je einer Bearbeitungsmaschine 2a, 2b bzw. einem der Magazine 3a-3f zugeordnet sind. Neben den genannten Sensor-Ansprechflächen weist die Überwachungseinrichtung zudem wiederum zwei Sensoren 15, 16 sowie eine Erfassungs- und Steuereinheit auf, welch letztere jedoch nicht dargestellt ist. Der erste Sensor 15 ist an dem Fussteil 7 des Roboters 5 angeordnet, während der zweite Sensor 16 an dem Vertikalschlitten (nicht dargestellt) fixiert ist. Der Roboter 5 ist in zwei unterschiedlichen Positionen dargestellt. In der linken Position befindet sich der erste Sensor 15 über einer Sensor-Ansprechfläche 18b. In dieser Position kann der Roboterarm 11 zum Erfassen oder Ablegen von Werkstücken in das zugehörige Magazin 3b eingreifen. Die rechte Position des Roboters 5 zeigt eine Stellung, in der der Roboterarm 11 zurückgezogen ist, so dass der zweite Sensor 16 angesprochen ist. Der erste Sensor 15 hingegen ist nicht angesprochen, da er sich ausserhalb der Sensor-Ansprechflächen 17a, 17b, 18a-18fbefindet. Somit steht am ersten Sensor eine Signal U_{A} von 0 an, während am zweiten Sensor ein Signal U_{A} von 1 ansteht. Da die Addition der beiden Sensorausgangssignale 1 ergibt (U_{A} erster Sensor + U_{A} zweiter Sensor = 1), kann der Roboter in diesem Zustand horizontal verfahren und/oder verschwenkt werden.

Die Sensor-Ansprechflächen 17a, 17b, 18a-18f besitzen eine derartige horizontale Ausdehnung, dass der Roboter 5 bei angesprochenem Sensor 15 entlang der jeweiligen Sensor-Ansprechfläche in Y-Richtung verfahren bzw. verschwenkt werden kann, so dass ein uneingeschränkter Zugang des Roboters 5 zu der jeweiligen Bearbeitungsmaschine 2a, 2b bzw. dem jeweiligen Magazin 3a-3f gewährleistet ist und die jeweilige Bearbeitungsmaschine 2a, 2b wie auch das jeweilige Magazin 3a-3f mittels des Roboters 5 sicher beladen und auch wieder entladen werden kann.

Die horizontal verlaufenden Sensor-Ansprechflächen sind nur in denjenigen Bereichen angeordnet, in welchen bestimmte Bewegungen des Roboters bzw. des Roboterarms grundsätzlich erlaubt sind. Auf das vorliegende Beispiel bezogen sind im Bereich der Magazine sowie der Bearbeitungsmaschinen horizontal verlaufende Sensor-Ansprechflächen derart angeordnet, dass der erste Sensor anspricht, wenn sich der Roboter vor einem der Magazine oder einer Bearbeitungsmaschine befindet.

Die horizontal verlaufenden Sensor-Ansprechflächen dienen konkret dazu, Bereiche festzulegen, innerhalb denen der Roboter seinen Roboterarm in horizontaler Richtung ausfahren darf. Im Zusammenwirken von Sensor und Sensor-Ansprechflächen genügt eine digitale Rückmeldung in Form eines 1- oder 0-Signals, wobei die Signale von der Überwachungseinrichtung derart ausgewertet werden, dass beim Anstehen eines 1-Signals eine Freigage für Roboterbewegungen erteilt wird (positive Sicherheit), während beim Anstehen eines 0-Signals eine Freigage für Roboterbewegungen nicht erteilt wird.

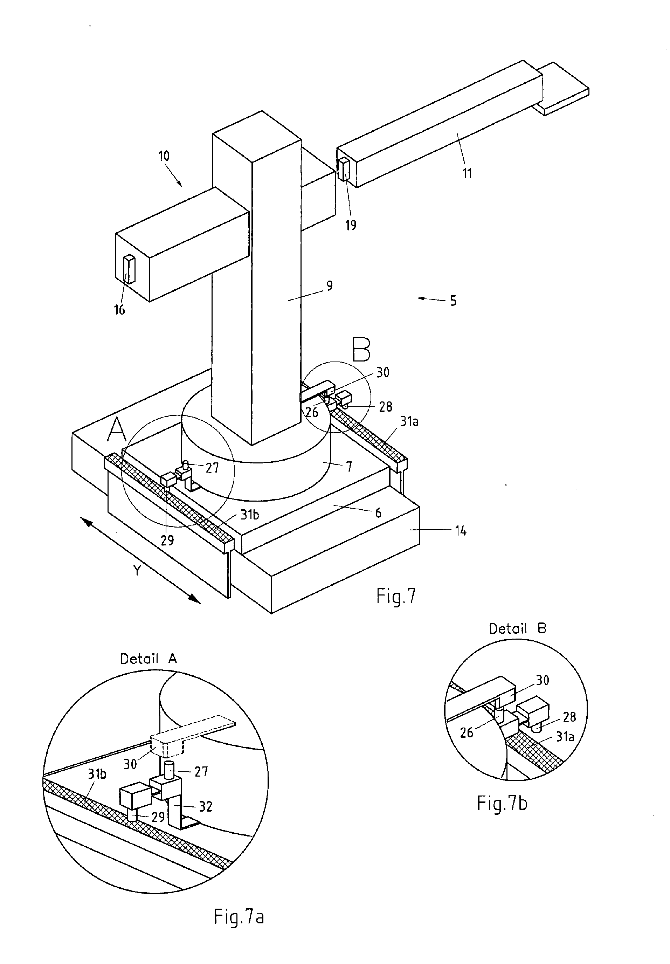

Die Fig. 7 zeigt einen Roboter 5 zusammen mit einem alternativen Ausführungsbeispiel einer Überwachungseinrichtung, während die Fig. 7a einen ersten vergrösserten Ausschnitt und die Fig. 7b einen weiteren vergrösserten Ausschnitt aus der Fig. 7 zeigt. Der Roboter 5 ist wiederum mittels seiner als Hauptschlitten dienenden Grundplatte 6 entlang einer in Y-Richtung verlaufenden Schiene 14 verfahrbar angeordnet. Der Haupttäger 9 ist mittels eines runden Fussteils 7 drehbar auf der Grundplatte 6 angeordnet. Der Roboterarm 11 ist im ausgezogenen Zustand dargestellt. Neben dem auf der Rückseite des Vertikalschlittens 10 angeordneten Sensor 16 zum Überwachen der Horizontallage des Roboterarms 11 umfasst die Überwachungseinrichtung vier weitere Sensoren 26, 27, 28, 29 sowie mehrere Sensor-Ansprechflächen 19, 30, 31a, 31 b. Der auf der Rückseite des Vertikalschlittens 10 angeordnete Sensor 16 ist wiederum zum zusammenzuarbeiten mit der am rückwärtigen Ende des Roboterarms 11 angeordneten Sensor-Ansprechfläche 19 bestimmt. Die Überwachungseinrichtung umfasst auch in diesem Beispiel eine Erfassungs- und Steuereinheit, wobei diese zugunsten einer übersichtlichen Darstellung nicht eingezeichnet ist.

Je zwei Sensoren 26, 28; 27 29 sind um 180° zueinander versetzt und liegen dem runden Fussteil 7 des Roboters 5 diametral gegenüber. Die vier Sensoren 26, 27, 28, 29 sind fest mit der Grundplatte 6 verbunden und drehen mit dem Fussteil 7 nicht mit. Die genannten vier Sensoren 26, 27, 28, 29 sind mittels Haltern mit der Grundplatte verbunden, wobei aus dieser Darstellung nur der eine, vordere Halter 32 (Fig. 7a) ersichtlich ist. Die elektrischen Felder der beiden dem runden Fussteil 7 zugewandten Sensoren 26, 27 sind nach oben gerichtet, während die elektrischen Felder der beiden dem runden Fussteil 7 abgewandten Sensoren 28, 29 nach unten in Richtung der am Boden angebrachten Sensor-Ansprechflächen 31 a, 31 b gerichtet sind. Am runden Fussteil 7 ist eine weitere Sensor-Ansprechfläche 30 angeordnet, welche mit den beiden inneren, dem runden Fussteil 7 zugewandten Sensoren 26, 27 zusammenzuarbeiten bestimmt ist. Beim Verdrehen des Hauptträgers 9 dreht der runde Fussteil 7 zusammen mit der Sensor Ansprechfläche 30 mit. Durch ein Verdrehen des Roboters um 180° aus der in Fig. 7 dargestellten Position, dreht sich die Sensor Ansprechfläche 30 ebenfalls um 180° mit, so dass sich letztere über dem zweiten Sensor 27 befindet, wie dies in der Fig. 7a dargestellt ist. Mit diesem Ausführungsbeispiel können daher zwei um 180° zueinander verdrehte Positionen des Roboters 5 erfasst werden. Es versteht sich, dass im Bedarfsfalls auch noch weitere, beispielsweise um 90° verdrehte Positionen des Roboters 5 erfasst werden können, indem ein weiterer Sensor bzw. weitere Sensoren entsprechend angeordnet wird/werden. Vorzugsweise sind die den beiden nach unten gerichteten Sensoren 28, 29 die zugeordneten Sensor-Ansprechflächen 31 a, 31 b am Boden oder an einer Schiene (nicht dargestellt), entlang welcher der Hauptschlitten verfahrenbar ist, angeordnet.

Bei dem gezeigten Ausführungsbeispiel müssen entweder die beiden auf der einen Seite angeordneten Sensoren 26 und 28, oder die beiden auf der anderen Seite angeordneten Sensoren 27 und 29 ein Ausgangssignal von 1 aufweisen, damit der Roboterarm 11 horizontal ausgefahren werden darf. Damit der Roboter in Y-Richtung verfahren werden darf, muss der auf der Rückseite des Roboterarms 11 angeordnete Sensor 16 ein Ausgangssignal von 1 aufweisen. Sobald am Sensor 16 ein Ausgangssignal von 1 ansteht, befindet sich der Roboterarm 11 in seiner zurückgezogenen Stellung. Sofern an keinem der Sensoren ein Ausgangssignal von 1 ansteht, wird der Roboter sofort energiefrei geschaltet und ein Alarmsignal ausgegeben.

Für die beiden äusseren, dem runden Fussteil 7 abgewandten Sensoren 28, 29 sind am Boden angeordnete Sensor-Ansprechflächen 31 a, 31 b vorgesehen, wobei hier beispielhaft nur deren zwei dargestellt sind. Beim axialen Verfahren des Roboters entlang der Y-Achse fahren die an der Grundplatte 6 angeordneten Sensoren 26-29 wie auch die Sensor Ansprechfläche 30 mit. Die Sensor Ansprechflächen 31a, 31b hingegen sind ortsfest am Boden angeordnet.

Die Anzahl und Positionen der ortsfest angeordneten Sensor-Ansprechflächen hängt davon ab, wie viele Magazine bzw. Bearbeitungsmaschinen mittels des Roboters beladen bzw. entladen werden müssen. Sofern beispielsweise auch quer oder schräg zur Verschieberichtung des Roboters 5 eine Bearbeitungsmaschine und/oder ein Magazin angeordnet ist, so könnte zusätzlich ein weiterer Sensor (nicht dargestellt) oder eine weitere Sensor-Ansprechfläche (nicht dargestellt) vorgesehen werden, welcher bzw. welche um einen vorbestimmten Winkel, beispielsweise 45° oder 90°, versetzt zu den gezeigten Sensoren bzw. Sensor-Ansprechflächen angeordnet ist. Eine derartige Ausführung ist insbesondere dann interessant, wenn nur sehr wenige Positionen angefahren werden müssen.

Anhand der Figur 8 wird ein alternatives Ausführungsbeispiel der Erfindung erläutert. Die Figur 8 zeigt dabei beispielhaft eine weitere Fertigungsanlage mit einem alternativen Ausführungsbeispiel der Erfindung. Die Fertigungsanlage umfasst ähnlich dem Ausführungsbeispiel gemäss Fig. 6 einen Roboter 5, dessen Hauptträger 9 drehbar auf einer Grundplatte 6 abgestützt ist. Die Grundplatte 6 ist auf einem Hauptschlitten 39 angeordnet, der in einer Horizontalrichtung (Y-Richtung) entlang einer Schiene 20 horizontal verfahrbar ist. Neben dem Roboter 5 weist die Fertigungsanlage eine Bearbeitungsmaschine 2c und ein Magazin 32 auf. Ein wesentlicher Unterschied zu den vorgängigen Ausführungsbeispielen besteht darin, dass der erste Sensor nicht als Näherungsschalter ausgebildet und auch nicht in Bodennähe angeordnet ist, sondern dass dieser oben an dem Hauptträger 9 befestigt und als optische Sensorvorrichtung, nachfolgend Sensor 33 genannt, ausgebildet ist. Der optische Sensor 33 umfasst eine Lichtmodul, welches Licht emittiert sowie ein Empfangsmodul, welches Licht empfängt, wobei weder das Lichtmodul noch das Empfangsmodul dargestellt sind. An der Bearbeitungsmaschine 2c ist eine erste, dem optischen Sensor 33 zugeordnete, Sensor-Ansprechfläche 34 angeordnet, während das Magazin 32 beispielhaft mit drei weiteren Sensor-Ansprechflächen 36a, 36b, 36c versehen ist, welche ebenfalls dem optischen Sensor 33 zugeordnet sind. Als Sensor-Ansprechflächen 32, 36a, 36b, 36c kommen optische Reflektoren zum Einsatz, welche den vom Sensor 33 bzw. dessen Lichtmodul emittierten Lichtstrahl 38a in Richtung des Sensors bzw. dessen Empfangsmoduls umlenken. Der jeweilige optische Reflektor und das Empfangsmodul sind derart aufeinander abgestimmt, dass das Empfangsmodul nur auf das vom Sender emittierte und vom optischen Reflektor reflektierte Licht anspricht bzw. dieses erkennt, herausfiltert und auswertet. Die Sensor-Ansprechflächen 32, 36a, 36b, 36c besitzen eine bestimmte flächige Ausdehnung. Innerhalb dieser Fläche wird der auftreffende Lichtstrahl um ca. 180° umgelenkt und in Richtung des Sensors 33 reflektiert. Da gattungsgemässe Sensorenvorrichtungen bekannt sind, wird an dieser Stelle nicht näher darauf eingegangen. Als Beispiel für eine derartige Sensorenvorrichtung sei eine "Sicherheits-Reflexions-Lichtschranke" "SRK 96" der Fa. Leuze electronic erwähnt.

Die erste Sensor-Ansprechfläche 34 ist an einer in vertikaler Richtung bewegbaren Türe 35 angeordnet, welche einen Bestandteil der Bearbeitungsmaschine 2c bildet. Die drei weiteren Sensor-Ansprechflächen 36a, 36b, 36c sind ortsfest oberhalb je eines Einschubbereichs 32a, 32b, 32c des Magazins 32 angeordnet.

Der Sensor wie auch der jeweilige Reflektor sind vorzugsweise oberhalb des Bewegungsbereichs von Personen, d.h. zumindest ca. 2m oberhalb des Bodens angeordnet, so dass sich Personen unterhalb des Lichtstrahls bewegen können, ohne diesen zu unterbrechen.

Neben dem optischen Sensor 33 umfasst die Überwachungseinrichtung zumindest einen weiteren Sensor. Als weiterer -zweiter- Sensor kann ein Sensor 16a in der Form eines Näherungsschalters zum Einsatz kommen, wie er vorgängig bereits erläutert wurde. Der zweite Sensor 16a ist in diesem Beispiel an dem Hauptträger 9 befestigt, während die zugehörige Sensor-Ansprechfläche 19a derart an der Rückseite des Roboterarms 11 angeordnet ist, dass an dem zweiten Sensor 16a ein Ausgangssignal von 1 ansteht, sobald sich der Roboterarm 11 in der zurückgezogene Ruheposition befindet.

Zusätzlich können weitere Sensoren und korrespondierende Ansprechflächen vorgesehen sein, wie dies durch den am Fussteil angeordneten Sensor 15a und die beiden Ansprechflächen 18g, 18h angedeutet ist. Jedenfalls kann der optische Sensor 33 durchaus mit weiteren Sensoren kombiniert werden, um je nach Anwendungsfall, eine optimale Lösung zu finden.

Die Funktionsweise des Roboters 5 wird nun insbesondere im Zusammenhang mit dem optischen Sensor 33 näher erläutert. Sofern sich der Roboterarm 11 in der hinteren Ruhestellung, d.h. in der nach hinten zurückgezogenen Position befindet, was anhand eines Signals U_{A} = 1 erkannt wird, kann der Roboter 5 entlang der Schiene 20 verfahren werden. Damit der Roboter 5 ein Freigabesignal zum Be- oder Entladen der Maschine 2c erhält, muss der vom Sensor 33 emittierte Lichtstrahl 38 von dem Empfängermodul des Sensors 33 erfasst werden. Das Empfängermodul erfasst den Lichtstrahl, wenn sich der Roboter 5 in einer vorbestimmten Position vor der Maschine 2c befindet, so dass der emittierte Lichtstrahl 38a von der Sensor-Ansprechfläche 34 in Richtung des Empfängermoduls umgelenkt wird. Dazu muss sich jedoch die Türe 35 in der hochgefahrenen Freigabeposition befinden, wie sie in der Fig. 8 dargestellt ist. Sofern sich die Türe 35 in der heruntergefahrenen Schliessposition befindet, was durch die gestrichelt dargestellte Tür 35' angedeutet ist, wird der Lichtstrahl von der Sensor-Ansprechfläche 34' auch dann nicht in Richtung des Empfängermoduls reflektiert, wenn sich der Roboter 5 genau vor der Maschine 2c befindet. Dies ist eine weiterer Vorteil des Sensors 33 und eine zusätzliche Sicherheitsmassnahme, indem der Roboter 5 nur bei geöffneter, d.h. hochgefahrener Tür Zugriff zu der Maschine 2c hat.

Um das Magazin 32 bedienen zu können, muss sich der Roboter 5 frontal vor einem der drei Einschubbereiche 32a, 32b, 32c des Magazins 32 befinden. Um die korrekte Beladeposition bzw. Entladeposition des Roboters 5 detektieren zu können, ist jedem der drei Einschubbereiche 32a, 32b, 32c eine Sensor-Ansprechfläche 36a, 36b, 36c zugeordnet. Sobald sich der Roboter vor einem dieser Einschubbereiche 32a, 32b, 32c befindet, wird das vom Sensor emittierte Licht in Richtung des Empfängermoduls reflektiert und der Roboter 5 erhält die Freigabe, damit er den entsprechenden Einschubbereich 32a, 32b, 32c bedienen kann.

Da die Sensor-Ansprechflächen 34, 36a, 36b, 36c eine gewisse Ausdehnung -Flächeaufweisen, ergibt sich sowohl horizontal wie auch vertikal ein vorbestimmter Bereich, innerhalb dessen das vom Sensor emittierte Licht noch in Richtung des Empfängermoduls reflektiert wird. Insbesondere die horizontale Ausdehnung der jeweiligen Sensor-Ansprechfläche 34, 36a, 36b, 36c erlaubt es, dass sich der Roboter in horizontaler Richtung innerhalb eines vorbestimmten Bereichs vor dem jeweiligen Einschubbereich 32a, 32b, 32c des Magazins 32 bzw. vor der Maschine 2c befinden muss, damit die Überwachungseinrichtung von dem Sensor 33 ein Freigabesignal zum Bedienen der Maschine bzw. des Magazins erhält. Dieser Bereich kann somit über die Breite der jeweiligen Sensor-Ansprechfläche 34, 36a, 36b, 36c bestimmt bzw. variiert werden.

Da die Höhe des an dem Hauptträger befestigten Sensors 33 fix ist, sollen über die vertikale Ausdehnung der jeweiligen Sensor-Ansprechfläche 34, 36a, 36b, 36c insbesondere Toleranzen wie mechanisches Spiel des Roboters, Wärmedehnungen der Materialien etc. ausgeglichen werden.

Kann jedoch beispielsweise an der Bearbeitungmaschine auf der entsprechenden Höhe kein Sensor 33 angebracht werden, kommt der Sensor 15a zum Einsatz. Ggf. könnte auch ein in vertikaler Richtung beweglicher Sensor 33 vorgesehen werden.Zusammenfassend ist festzustellen, dass mit einer erfindungsgemäss ausgebildeten Überwachungseinrichtung einerseits eine hohe Sicherheit gewährleistet wird, wobei gleichzeitig die Sicherheitsabschrankung vereinfacht werden kann, indem diese nur noch als Zutritts- bzw. Zugriffsschutz für Personen dienen muss. Eine solche Abschrankung braucht nicht mehr derart stabil zu sein, dass sie in jedem Fall ein Eindringen bzw. Durchdringen des Roboters bzw. Roboterarm auch im ungünstigsten Fall, namentlich bei hohen Robotergeschwindigkeiten und hohen Transfergewichten, verhindern muss. Zudem kann die Abschrankung tiefer und enger gehalten werden, was sich letztlich in geringeren Kosten niederschlägt. Durch die erläuterten Verknüpfungen zwischen Sensorsignalen und Robotersteuerung wird sichergestellt, dass der Roboter bzw. Roboterarm nicht in den unmittelbaren Bereich der Abschrankung gelangen und in diese eindringen oder diese gar durchdringen kann. Im Vergleich mit den bisherigen Abschrankungen kann diese somit einfach, leicht und kostengünstig ausgebildet sein.

Die erfindungsgemäss ausgebildete Überwachungseinrichtung eignet sich in besonders bevorzugter Weise für Roboter, bei denen der Roboterarm nur in einer Bewegungsachse horizontal verfahren werden kann, insbesondere in einer horizontalen Linearachse.

Unter dem Begriff Sensor-Ansprechflächen sind sämtliche Mittel subsumiert, welche ein Ansprechen -Schalten- des Sensors bei dessen Annäherung bewirken. Neben diversen Metallen, welche beispielsweise auf einen induktiv arbeitenden Sensor abgestimmt sind, kommen beispielsweise auch optische, magnetische, akustische usw. Sensor-Ansprechflächen in Frage, wobei diese Aufzählung nicht als abschliessend anzusehen ist.

## Patentansprüche

1. Überwachungseinrichtung zum Überwachen und/oder Erfassen von vorgegebenen Positionen eines mindestens 2 Bewegungs-Achsen aufweisenden Roboters (5), welch letzterer einen um eine Z-Achse drehbaren Hauptträger (9) und einen daran abgestützten Roboterarm (11) aufweist, wobei die Überwachungseinrichtung zumindest zwei Sensoren (15, 16, 33) und den Sensoren zugeordnete Sensor-Ansprechflächen (17a, 17b, 18a-18f, 32, 36a, 36b, 36c) aufweist, und wobei die Überwachungseinrichtung dem Roboter in Abhängigkeit des an dem einen und/oder anderen Sensor (15, 16, 33) anstehenden Signals ein Freigabesignal zum Ausführen vorbestimmter Bewegungen erteilt, **dadurch gekennzeichnet, dass** der erste Sensor (15, 33) dazu bestimmt ist, eine Horizontalposition und/oder Drehstellung des Hauptträgers (9) zu Erfassen und der zweite Sensor (16) eine definierte Horizontalstellung des Roboterarms (11), insbesondere dessen zurückgezogene Position, zu Erfassen bestimmt ist, und wobei im horizontalen Bewegungsbereich und/oder Schwenkbereich des Roboters (5) unabhängig von dem Roboter (5) selektiv Sensor-Ansprechflächen (17a, 17b, 18a-18f; 34, 36a-36c) für den ersten Sensor (15; 33) angeordnet sind.

2. Überwachungseinrichtung nach Anspruch 1, **dadurch gekennzeichnet, dass** die dem ersten Sensor (15) zugeordneten Sensor-Ansprechflächen (17a, 17b, 18a-18f) ortsfest angeordnet sind.

3. Überwachungseinrichtung nach Anspruch 1, **dadurch gekennzeichnet, dass** zumindest eine, dem ersten Sensor (15) zugeordnete Sensor-Ansprechfläche (34) in einer Achse beweglich und unabhängig von dem Roboter angeordnet ist.

4. Überwachungseinrichtung nach Anspruch 1, **dadurch gekennzeichnet, dass** zumindest einzelne Sensoren (15, 16) als digitale Näherungsschalter ausgebildet sind, an denen im angesprochenen Zustand ein Ausgangssignal von 1 ansteht.

5. Überwachungseinrichtung nach Anspruch 1, **dadurch gekennzeichnet, dass** zumindest ein Sensor ein optischer Sensor (33) ist, mittels welchem eine vorbestimmte Position des Roboters (5) erkennbar ist.

6. Überwachungseinrichtung nach Anspruch 1 oder 2, **dadurch gekennzeichnet, dass** die Überwachungseinrichtung eine mit den Sensoren (15, 16) verbundene Erfassungs- und Steuereinheit (21) aufweist, welch letztere den Roboter (5) derart zu steuern bestimmt ist, dass eine Bewegungsfreigabe nur dann erteilt wird, wenn sich der erste und/oder zweite Sensor (15, 16) im angesprochenen Zustand befindet.

7. Überwachungseinrichtung nach Anspruch 5, **dadurch gekennzeichnet, dass** die Erfassungs- und Steuereinheit (21) den Roboter (5) derart zu steuern bestimmt ist, dass eine Bewegungsfreigabe an den Roboterarm (11) nur dann erteilt wird, wenn sich der erste Sensor (15) im angesprochenen Zustand befindet.

8. Überwachungseinrichtung nach Anspruch 5 oder 6, **dadurch gekennzeichnet, dass** die Erfassungs- und Steuereinheit (21) den Roboter (5) derart zu steuern bestimmt ist, dass eine Bewegungsfreigabe zur horizontalen Bewegung des gesamten Roboters (5) nur dann erteilt wird, wenn sich der zweite Sensor (16) im angesprochenen Zustand befindet.

9. Überwachungseinrichtung nach Anspruch 1 oder 2, **dadurch gekennzeichnet, dass** die dem ersten Sensor (15, 33) zugeordneten Sensor-Ansprechflächen (17a, 17b, 18a-18f, 34, 36a-36c) im Bereich von erlaubten Bewegungen des Roboterarms (11) angeordnet sind, insbesondere im Bereich einer Bearbeitungsmaschine (2a, 2b, 2c) und/oder eines Magazins (3a-3f, 32).

10. Überwachungseinrichtung nach einem der vorhergehenden Ansprüche, zur Überwachung von Positionen eines ortsfest angeordneten, jedoch schwenkbaren Roboters (5), **dadurch gekennzeichnet, dass** im Schwenkbereich des Roboters (5) gekrümmte oder gebogene, dem ersten Sensor (15) zugeordneten Sensor-Ansprechflächen (18a, 18b) angeordnet sind.

11. Überwachungseinrichtung nach einem der vorhergehenden Ansprüche, **dadurch gekennzeichnet, dass** der zweite Sensor (16) an einem den Roboterarm (11) tragenden Vertikalschlitten (10) angeordnet ist, während an dem Roboterarm (11) eine dem zweiten Sensor (16) zugeordnete Sensor-Ansprechfläche (19) derart angeordnet ist, dass an dem zweiten Sensor (16) ein Ausgangssignal von 1 ansteht, sobald sich der Roboterarm (11) in der zurückgezogene Ruheposition befindet.

12. Überwachungseinrichtung nach einem der vorhergehenden Ansprüche, zur Überwachung von Horizontalpositionen eines in einer Richtung (23) verfahrbar angeordneten Roboters (5), **dadurch gekennzeichnet, dass** die Überwachungseinrichtung parallel und/oder quer zur Y-Richtung (23) verlaufende, dem ersten Sensor (15, 33) zugeordnete Sensor-Ansprechflächen (17a, 17b, 18a-18f, 32, 36a-36c) umfasst.

13. Überwachungseinrichtung nach Anspruch 11, zur Überwachung eines Roboters (5),
dessen Hauptträger (9) mittels eines drehbaren Fussteils (7) auf einer Grundplatte (6) abgestützt ist, **dadurch gekennzeichnet, dass** die Überwachungseinrichtung zumindest zwei auf der Grundplatte (6) des Roboters (5) unter einem Winkel zueinander angeordnete Sensoren (26, 27) sowie eine am drehbaren Fussteil (7) angeordnete und mit den genannten Sensoren (26, 27) zusammenwirkende Sensor-Ansprechfläche (30) umfasst, welch letztere derart angeordnet ist, dass bei vorbestimmten Drehpositionen des Hauptträgers (9) einer der Sensoren (26, 27) angesprochen ist.

14. Überwachungseinrichtung nach Anspruch 12, zur Überwachung eines Roboters (5) dessen Hauptträger (9) mittels eines drehbaren Fussteils (7) auf einer Grundplatte (6) abgestützt ist, **dadurch gekennzeichnet, dass** die Überwachungseinrichtung zumindest zwei unter einem Winkel zueinander auf der Grundplatte (6) des Roboters (5) angeordnete Sensoren (28, 29) umfasst, welche derart mit im Bereich des Bodens angeordneten Sensor-Ansprechflächen (30) zusammenwirken, dass bei vorbestimmten Verschiebepositionen des Roboters (5) in Y-Richtung einer der Sensoren (28, 29) angesprochen ist.

15. Überwachungseinrichtung nach einem der vorhergehenden Ansprüche, zur Überwachung eines Roboters (5), dessen Roboterarm (11) in horizontaler Richtung in Relation zum Hauptträger (9) nur entlang einer Achse verschiebbar ist, **dadurch gekennzeichnet, dass** der zweite Sensor (16) zum Überwachen der zurückgezogenen Horizontalstellung des Roboterarms (11) ausgebildet ist.

16. Fertigungsanlage (1) mit einer nach einem der vorhergehenden Ansprüche ausgebildeten Überwachungseinrichtung, wobei die Fertigungsanlage (1) zumindest einen Roboter (5) sowie eine Bearbeitungsmaschine (2a, 2b) und/oder ein Magazin (3a-3f) umfasst, welche mittels des Roboters (5) bestückbar ist/sind, **dadurch gekennzeichnet, dass** im Bereich der/des mittels des Roboters (5) jeweils zu bestückenden Bearbeitungsmaschine (2a, 2b) bzw. Magazins (3a-3f) jeweils eine Sensor-Ansprechfläche (17a, 18b, 18a-18fb) derart angeordnet ist, dass der erste Sensor (15) durch die jeweilige Sensor-Ansprechfläche (17a, 18b, 18a-18f) angesprochen ist, wenn sich der Roboter (5) im Beladebereich bzw. Entladebereich der jeweiligen Bearbeitungsmaschine (2a, 2b) bzw. des jeweiligen Magazins (3a-3f) befindet und dass der zweite Sensor (16) derart am Roboter (5) angeordnet ist, dass damit eine definierte Horizontalstellung des Roboterarms (11), insbesondere dessen zurückgezogene Position erfassbar ist.

17. Fertigungsanlage nach Anspruch 15, **dadurch gekennzeichnet, dass** die
horizontale Ausdehnung der jeweiligen Sensor-Ansprechfläche (17a, 17b, 18a-18f) so gewählt ist, dass der Roboter (5) bei angesprochenem Sensor (15, 16) um einen vorbestimmten Weg verschoben und/oder um einen vorbestimmten Winkel gedreht werden kann.

18. Fertigungsanlage nach Anspruch 15 oder 16, **dadurch gekennzeichnet, dass** der
zweite Sensor (16) angesprochen ist, wenn sich der Roboterarm (11) in einer zurückgezogenen Ruhestellung befindet.

19. Fertigungsanlage nach einem der Ansprüche 15 bis 17, **dadurch gekennzeichnet, dass** eine Bewegungsfreigabe an den Roboter (5) mittels der Erfassungs- und Steuereinheit (21) erteilt wird, wenn sich zumindest einer der beiden Sensoren (15, 16) im angesprochenen Zustand befindet.

20. Fertigungsanlage nach einem der Ansprüche 15 bis 18, **dadurch gekennzeichnet, dass** die Bewegungsfreigabe an den Roboter (5) mittels der Erfassungs- und Steuereinheit (21) unterbunden wird, wenn sich keiner der beiden Sensoren (15, 16) im angesprochenen Zustand befindet.
